# FASCICULE DE BREVET EUROPEEN

(11) **EP 3 894 251 B1**
(45) Date de publication et mention de la délivrance du brevet: **28.12.2022**
(21) Numéro de dépôt: 19823807.3
(22) Date de dépôt: 19.11.2019
(51) Int. Cl.: B60K 6/48, B60W 10/06, B60W 10/08, B60W 20/40

(54) **PROCEDE DE COMMANDE DU DEMARRAGE D'UN MOTEUR THERMIQUE DE VEHICULE HYBRIDE**
VERFAHREN ZUM BEFEHLIGEN DES ANLASSENS EINER WÄRMEMASCHINE EINES HYBRIDFAHRZEUGS
METHOD FOR COMMANDING THE STARTING OF A HEAT ENGINE OF A HYBRID VEHICLE

(30) Priorité: 11.12.2018 FR 1872667
(43) Date de publication de la demande: 20.10.2021
(73) Titulaire: PSA Automobiles SA, 78300 Poissy (FR)
(72) Inventeur: TROJANI, Joseph, 89100 Sens (FR); BOUCRAUT, Sebastien, 94130 Nogent Sur Marne (FR); HARAKAT, Adel, 95150 Taverny (FR)
(86) Numéro de dépôt international: PCT/FR2019/052759
(87) Numéro de publication internationale: WO 2020/120854

(56) Documents cités:
- EP-A1- 2 634 052
- EP-A1- 3 251 881
- JP-A- 2008 247 128

## Description

Le domaine de l'invention concerne un procédé de commande du démarrage d'un moteur thermique de groupe motopropulseur hybride de véhicule automobile, en particulier les procédures de démarrage consistant à entrainer l'arbre du moteur thermique jusqu'au régime de ralenti uniquement par le couple fourni par une deuxième machine motrice du groupe motopropulseur.

Typiquement, une procédure de démarrage conventionnelle du moteur thermique d'un véhicule automobile est opérée au moyen d'un démarreur dédié ayant pour fonction d'amener le moteur thermique à un régime de rotation de démarrage suffisamment élevé pour déclencher la première combustion. Ce régime de démarrage se situe généralement autour de 200 tr/min. Pour ce type de démarrage à bas régime, la prestation de démarrage n'est pas homogène en termes de durée et d'agrément car elle est dépendante des facteurs climatiques, en particulier la température extérieure.

Les véhicules hybrides électriques munis d'une deuxième machine motrice pouvant être accouplée mécaniquement au moteur thermique ont permis de surpasser ces problèmes. On connait le document DE102007022530A1 décrivant une procédure de démarrage au cours de laquelle la machine de traction électrique est accouplée au moteur thermique pour entrainer en rotation le vilebrequin jusqu'au régime de ralenti, typiquement à un régime proche de 800 tr/min, avant de déclencher la première combustion. Ce mode de démarrage dit à régime élevé est particulièrement avantageux car il offre une prestation de démarrage homogène et des prestations acoustiques et vibratoires satisfaisantes.

On connait également le document US20150291149A1 décrivant un procédé de démarrage d'un moteur thermique dans lequel une première des machines motrices électriques est pilotée pour fournir du couple uniquement au moteur thermique afin d'opérer son démarrage, tandis que le couple moteur est transmis aux roues uniquement par une deuxième machine motrice électrique. Le déclenchement d'une requête de démarrage est fonction du couple moteur demandé par le conducteur.

On connait en outre du document JP-2008247128-A un procédé conforme au préambule de la revendication 1, et prenant en compte une température d'une batterie alimentant la machine motrice.

Les procédures de démarrage opérées à partir du couple moteur d'une machine motrice de traction de véhicule hybride présentent toutefois un problème car, lorsque la puissance électrique du système de batterie basse tension alimentant la machine motrice n'est pas suffisante, à l'instant de la requête de démarrage, pour fournir un couple moteur électrique permettant d'atteindre le régime de ralenti, le démarrage à régime élevé est susceptible d'échouer et de se répéter tant que le niveau de puissance électrique est insuffisant.

L'invention vise à résoudre les problèmes précités des démarrages opérés par démarreur conventionnel ainsi que les démarrages opérés par la machine motrice de traction. Un objectif est de proposer un procédé de démarrage permettant de garantir des prestations homogènes de démarrage en termes de durée et d'agrément. Un autre des objectifs principaux est de garantir le succès du démarrage du moteur thermique dans un délai sécuritaire prédéterminé.

Plus précisément, l'invention concerne un procédé de commande du démarrage d'un moteur thermique de groupe motopropulseur hybride comportant également une machine motrice de traction alimentée par un accumulateur d'énergie apte à être accouplée au moteur thermique en cas de détection d'une requête de démarrage de manière à entrainer en rotation le moteur thermique à un régime cible moteur auquel la première combustion du moteur est déclenchée. Selon l'invention, le procédé comporte les étapes successives suivantes :
- en cas de détection d'une requête de démarrage, la détermination de la puissance d'énergie délivrable par l'accumulateur à ladite machine motrice à l'instant de la détection de ladite requête,
- lorsque ladite puissance d'énergie est supérieure à un seuil prédéterminé, le déclenchement d'une première procédure de démarrage consistant à entrainer en rotation le moteur thermique par la machine motrice jusqu'à atteindre un premier régime cible moteur,
- et lorsque ladite puissance est inférieure audit seuil, le déclenchement d'une deuxième procédure de démarrage consistant à entrainer en rotation le moteur thermique par la machine motrice jusqu'à atteindre un deuxième régime cible moteur inférieur au premier régime cible.

Selon l'invention, le procédé comporte en outre, en cas de détection d'un échec de la première procédure de démarrage, le déclenchement de la deuxième procédure de démarrage.

Selon une variante, le déclenchement de la deuxième procédure de démarrage est indépendant de la puissance d'énergie délivrable par l'accumulateur.

Selon une variante, le procédé comporte en outre, en cas de détection de l'échec, la temporisation du déclenchement de la deuxième procédure durant une durée d'arrêt prédéterminée.

Selon une variante, pour détecter l'échec de la première procédure de démarrage, le procédé comporte le calcul en continu d'une durée depuis l'instant du déclenchement de ladite première procédure, et lorsque ladite durée écoulée est supérieure à une durée sécuritaire prédéterminée, un signal d'alerte est émis.

Selon une variante, la première procédure de démarrage consiste à piloter la machine motrice en mode de régulation de régime en fonction d'une consigne de régime configurée pour entrainer le moteur thermique en rotation jusqu'au premier régime cible moteur.

Selon une variante, la deuxième procédure de démarrage consiste à piloter la machine motrice en mode de régulation de couple en fonction d'une consigne de couple configurée pour entrainer le moteur thermique en rotation jusqu'au deuxième régime cible moteur.

Selon une variante, le premier régime cible du moteur thermique est compris entre 650 tr/min et 1200 tr/min et de préférence est d'environ 800 tr/min.

Selon une variante, le deuxième régime cible du moteur thermique est compris entre 100 tr/min et 300 tr/min, et de préférence est environ 200 tr/min.

L'invention prévoit également une unité de commande d'un groupe motopropulseur hybride de véhicule automobile comportant des moyens de mettre en oeuvre le procédé selon l'un quelconque des modes de réalisation précédents.

L'invention envisage également un véhicule automobile comportant un groupe motopropulseur hybride comprenant un moteur thermique, une machine motrice de traction, laquelle est apte à fournir un couple aux roues en mode de roulage électrique et apte à transmettre un couple moteur au moteur thermique, et ladite unité de commande précédente.

Grâce à l'invention, le groupe motopropulseur hybride peut être piloté pour opérer un démarrage uniquement par le couple moteur délivré par la machine motrice électrique à l'arrêt du véhicule lors de la mise en action du véhicule, par exemple lorsque le conducteur appuie sur le bouton de démarrage tout en actionnant le frein. A cet effet, la stratégie de démarrage prévoit d'adapter le pilotage de la machine motrice en fonction des conditions d'alimentation électrique du système de batterie de puissance. De plus, en cas d'échec d'un démarrage à haut régime, le procédé prévoit une procédure alternative permettant la mise en rotation du moteur thermique avec un couple moteur électrique réduit. De plus, grâce à cette stratégie, il est possible de s'affranchir d'un démarreur dédié au démarrage du moteur thermique.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
[Fig. 1] représente schématiquement un groupe motopropulseur hybride de véhicule automobile comportant une machine motrice de traction apte à entrainer en rotation le moteur thermique lors d'une procédure de démarrage.
[Fig. 2] représente un synoptique fonctionnel de l'unité de commande destiné à mettre en œuvre le procédé de démarrage du moteur thermique selon l'invention.
[Fig. 3] représente un graphique illustrant une séquence de démarrage du moteur thermique lors de l'échec d'une première procédure comprenant une deuxième tentative à un régime cible moteur abaissé conformément à une deuxième procédure.
[Fig. 4] représente un synoptique d'un algorithme du procédé de démarrage du moteur thermique conformément à l'invention lors de l'échec de la première procédure.

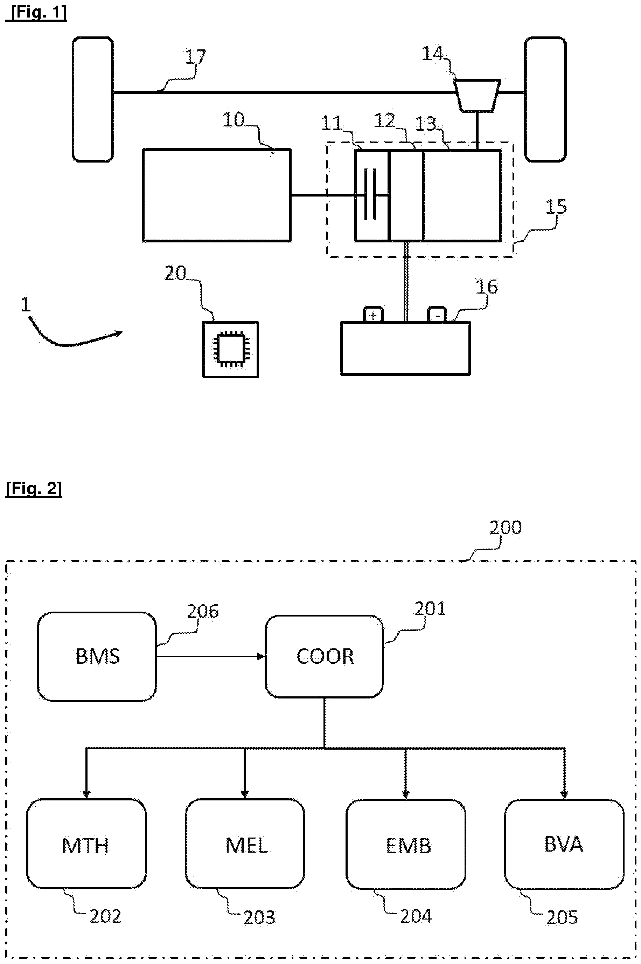

La figure 1 représente un groupe motopropulseur hybride 1 d'un véhicule automobile équipé d'un module de traction avant relié mécaniquement au train de roues avant 17. Le module de traction comporte un moteur thermique 10, un organe de couplage 11, par exemple un dispositif d'embrayage, reliant une machine motrice électrique de traction avant 12 au moteur thermique 10, et une boite de vitesses 13 dont l'axe de sortie est relié mécaniquement au train de roues avant 17 par l'intermédiaire d'un différentiel 14. La boite de vitesses 13 relie mécaniquement la machine motrice 12 au train de roues 17.

La machine motrice électrique de traction avant 12 est apte à fournir un couple moteur aux roues, de manière indépendante en mode de roulage électrique ou alors en complément du moteur thermique 10 en mode de roulage hybride. Dans cet exemple particulier, on notera que le dispositif d'embrayage 11, la machine motrice électrique 12 et la boite de vitesses 13 sont intégrés dans un même module 15 dit module de boite de vitesses automatisée et électrifiée. L'organe de couplage 11 peut être tout type de dispositif de transmission de puissance mécanique permettant de transmettre sélectivement un couple moteur entre la machine motrice 12 et le moteur thermique 10, à titre d'exemple non limitatif un embrayage sec à disque de friction, un embrayage humide multi-disques, ou alors un convertisseur de couple.

Le groupe motopropulseur comporte en outre un accumulateur d'énergie électrique d'un système de batterie de puissance 16 connecté électriquement à la machine motrice 12 pour délivrer de l'énergie électrique permettant la fourniture d'un couple moteur électrique au train de roues 17. De plus, la machine motrice 12 est apte à transmettre un couple moteur électrique au moteur thermique 10 lorsque celui-ci est accouplé à la machine motrice 12 par l'intermédiaire du dispositif d'embrayage 11. L'invention adresse particulièrement ce dernier mode opératoire pour démarrer le moteur thermique lorsque celui-ci est à l'arrêt, par exemple au premier démarrage du véhicule lors de sa mise en action déclenchée par le conducteur.

On précisera que dans d'autres variantes, le groupe motopropulseur hybride peut être une technologie alternative, telle une technologie hybride hydraulique/air comprimé. La machine motrice est alors une machine motrice hydraulique, le dispositif d'embrayage peut être remplacé par un autre organe de couplage adapté à la technologie hybride hydraulique/air comprimé et l'accumulateur d'énergie est un accumulateur d'un fluide comprimé. On n'écarte pas non plus la possibilité d'équiper le groupe motopropulseur d'un ou plusieurs autres organes de démarrage, tel un alterno-démarreur.

Par ailleurs, le groupe motopropulseur comporte une unité de commande 20 permettant de piloter et coordonner chacun des organes du groupe motopropulseur 1. L'unité de commande 20 peut être un unique module ou peut être constituée de plusieurs modules répartis par exemple entre le moteur thermique 10 et le module de boite de vitesses 15. L'unité de commande 20 est un calculateur à circuits intégrés comprenant des mémoires pour l'enregistrement de fonctions de motorisation du groupe motopropulseur 1.

Dans le cadre de l'invention, l'unité de commande 20 est spécifiquement configurée pour exécuter un procédé de commande de démarrage du moteur thermique 10 exploitant le couple moteur électrique transmis au vilebrequin du moteur thermique par la machine motrice 12. Le procédé de commande adresse particulièrement les procédures de démarrage lors de la mise en action du véhicule, c'est-à-dire lorsque le moyen de commande du démarrage du véhicule est actionné par le conducteur, par exemple un actionnement clé ou actionnement bouton de démarrage et frein du véhicule.

La figure 2 décrit plus précisément un organigramme fonctionnel 200 de l'unité de commande permettant de mettre en œuvre le procédé de démarrage selon l'invention. L'unité de commande comporte un premier module 201 pour la coordination du moteur thermique, la machine motrice électrique, le dispositif d'embrayage, la boite de vitesses et le système de batterie de puissance, notamment lors de l'exécution d'une procédure de démarrage. Le module de coordination est apte à recevoir des paramètres d'état du groupe motopropulseur issus de chacun de ces organes. En particulier, pour coordonner une procédure de démarrage et respecter des contraintes de délais et d'agréments prédéterminées, le premier module de coordination 201 reçoit continuellement les informations issues de signaux d'état provenant des modules fonctionnels décrits ci-après. De plus, le module de coordination 201 surveille notamment si une requête de démarrage est activée, par exemple suite à une demande conducteur lors du premier démarrage ou bien encore un autre système du groupe motopropulseur pour un besoin du véhicule, l'état d'exécution d'une procédure de démarrage et un signal d'alerte relatif à une procédure de démarrage en cours d'opération. Le signal d'alerte permet de mettre fin à la procédure de démarrage en cours pour déclencher une autre procédure de démarrage.

Un deuxième module de gestion du système de batterie 206, désigné également par l'acronyme anglais BMS pour « Battery Management System », communique les informations concernant le niveau de puissance électrique délivrable à la machine motrice à partir de la tension et du courant électrique disponible pour alimenter la machine motrice. Cette information est judicieusement utilisée pour sélectionner le type de procédure de démarrage. Il s'agit du système de batterie de puissance de plusieurs centaines de volts dont la mission principale est l'alimentation de la machine motrice de traction.

Un troisième module 202 de contrôle du moteur thermique MTH est apte à communiquer les informations concernant le régime de rotation, l'état d'allumage et arrêt du moteur thermique et l'état d'un signal de requête de démarrage du moteur.

Un quatrième module 203 de contrôle de la machine motrice MEL communique les informations relatives au régime de rotation et de couple moteur et si le mode de contrôle est un mode en régulation de régime ou un mode en régulation de couple.

Un cinquième module 204 communique les informations relatives à la position et/ou le couple transmis par le dispositif d'embrayage EMB. Ces informations permettent de piloter le couple transmis et par conséquent le régime de rotation du moteur thermique lorsque celui-ci est entrainé par la machine motrice lors d'une procédure de démarrage.

Enfin un sixième module 205 communique les informations relatives à l'état de la boite de vitesses BVA, par exemple l'état des circuits hydrauliques, la configuration des rapports de vitesses, l'état et position des actionneurs de rapports de vitesses.

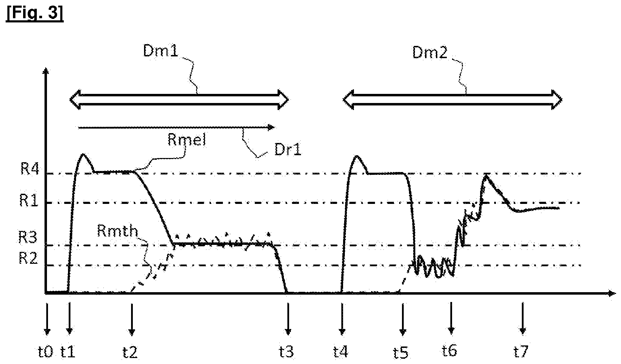

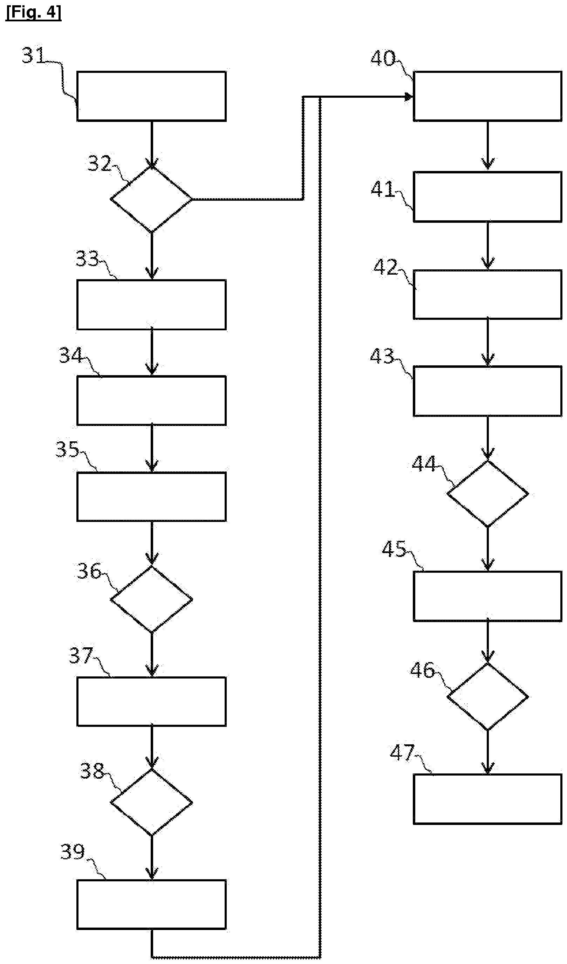

Les figures 3 et 4 illustrent l'exécution du procédé de démarrage selon l'invention permettant de garantir le succès du démarrage dans un délai prédéterminé sécuritaire et des prestations acoustiques et vibratoires satisfaisantes. La figure 3 est un graphique illustrant l'évolution du régime de la machine motrice Rmel en trait plein et du moteur thermique Rmth en trait pointillé au cours d'une situation de démarrage présentant une première tentative. Dans cette situation, la première tentative de démarrage à régime élevé échoue mais est résolue grâce à l'invention. La figure 4 illustre l'algorithme de mise en œuvre du procédé relative à cette situation de démarrage.

Conformément à l'invention, l'unité de commande est apte à piloter une première procédure de démarrage Dm1, dite également stratégie de démarrage à régime élevé, consistant à entrainer le régime du moteur thermique, grâce au couple moteur électrique transmis par la machine motrice électrique de traction via le dispositif d'embrayage, jusqu'à un premier régime cible R1 configuré à une valeur proche du régime de ralenti du moteur thermique. Pour ce moteur, le régime cible est compris entre 650 tr/min et 1200 tr/min et est de préférence d'environ 800 tr/min. Une fois que le premier régime cible est atteint, le module de commande du moteur thermique déclenche la première combustion. Cette première procédure a pour avantage d'offrir des prestations de démarrage homogènes quelles que soient les conditions climatiques extérieures.

Toutefois, l'inconvénient de cette première procédure est que la mise en rotation de l'arbre moteur du moteur thermique, lorsqu'il est à l'arrêt, requière un couple moteur électrique important qui est conditionné à la puissance électrique délivrable par le système de batterie. Le procédé prévoit donc une vérification des capacités de la machine électrique à délivrer le couple moteur nécessaire à la mise en rotation de l'arbre du moteur thermique.

A cet effet, en cas de détection d'une requête de démarrage à une étape 31, le procédé comporte à une étape 32 la détermination de la puissance électrique délivrable par l'accumulateur à la machine motrice électrique à l'instant de la détection de ladite requête. La puissance est estimée par le système de batterie à partir du courant électrique délivrable à la machine motrice et de la tension électrique aux bornes du système. On notera que la puissance délivrable peut être estimée à partir du paramètre d'état de charge du système de batterie, de la température du système de batterie, du paramètre de courant consommé et de courant maximum délivrable ou de l'état d'activation d'équipements consommateurs du véhicule alimentés par le système de batterie.

Dans un premier cas, lorsque ladite puissance d'énergie est supérieure à un seuil prédéterminé garantissant un niveau de couple moteur électrique délivrable au moteur thermique, le procédé comporte le déclenchement de la première procédure de démarrage Dm1, puis le déclenchement de la première combustion lorsque le premier régime cible R1 est atteint. Selon la figure 4, l'étape 33 est l'étape suivante de déclenchement de la première procédure de démarrage.

Dans un deuxième cas, lorsque la puissance d'énergie électrique est inférieure au seuil prédéterminé, on estime que la machine motrice n'est pas en condition d'entrainer l'arbre moteur jusqu'au régime de ralenti. Pour résoudre ce problème, le procédé prévoit le déclenchement d'une deuxième procédure de démarrage Dm2 consistant à entrainer en rotation le moteur thermique par la machine motrice jusqu'à atteindre un deuxième régime cible moteur R2 qui est inférieur au premier régime cible. Lorsque ce deuxième régime cible est atteint, le module du moteur thermique déclenche la première combustion. Le deuxième régime cible du moteur thermique est un régime compris entre 100 tr/min et 300 tr/min et de préférence d'environ 200 tr/min, similairement au régime d'entrainement d'un démarreur conventionnel dédié uniquement au démarrage du moteur thermique. Ainsi, selon la figure 4 dans ce deuxième cas, le procédé passe à l'étape 40 de déclenchement de la deuxième procédure Dm2.

On ajoutera par ailleurs que la deuxième procédure de démarrage Dm2 consiste à piloter la machine motrice en régulation de couple, tandis que la première procédure de démarrage Dm1 consiste à piloter la machine motrice en régulation de régime. Ainsi, le procédé de commande améliore la précision du pilotage de la montée en régime durant la première procédure Dm1, améliorant ainsi les performances et agrément du démarrage. La deuxième procédure Dm2 se différencie par un meilleur contrôle du couple moteur pour assurer la rotation au régime R2 jusqu'à la première combustion.

En figure 3, la situation illustrée est un cas où l'unité de commande détecte que la puissance d'énergie est supérieure au seuil prédéterminé. R1 est la valeur du premier régime cible, environ 800 tr/min, R2 est la valeur du deuxième régime cible, environ 200 tr/min et R3 est une valeur intermédiaire comprise entre 200 tr/min et 500 tr/ min. L'axe des abscisses représente le temps.

On verra dans cette situation que le couple moteur de la machine électrique n'est toutefois pas suffisant pour emmener le régime Rmth jusqu'à la valeur R2. Le régime moteur Rmth stagne à la valeur R3 du fait du manque de puissance d'énergie électrique délivrable à la machine motrice. Les causes de stagnation du régime peuvent être diverses, par exemple une estimation erronée de la puissance électrique par le système BMS. Comme on le verra, cette situation sera néanmoins résolue grâce à l'invention par le déclenchement forcé de la deuxième procédure Dm2.

A t0, le procédé détecte la requête de démarrage correspondant à l'étape 31. Ensuite, à l'étape 32, le procédé comporte la détermination de la puissance électrique délivrable par l'accumulateur à la machine motrice électrique à l'instant de la détection de ladite requête. L'unité de commande détecte que la puissance électrique est supérieure au seuil prédéterminé. Le procédé commande donc l'étape 33 de déclenchement de la première procédure de démarrage.

A l'étape 33, le module de coordination informe le calculateur du moteur thermique que la première procédure de démarrage Dm1 est déclenchée et à une étape 34 le module de coordination informe le calculateur de la boite de vitesses que la première procédure est déclenchée. Ces deux étapes ont pour objectif de déclencher la séquence des consignes nécessaires pour le déroulement de la première procédure de démarrage, notamment les consignes d'injection, de boucle d'air et la valeur de régime moteur à laquelle est déclenchée la première combustion.

Ensuite, à l'instant t1, le procédé commande une étape 35 de pilotage de la machine électrique à une valeur de régime R4, ici supérieure à la valeur du régime de ralenti du moteur thermique. Cette étape vise à mettre en pression le moteur thermique au moyen d'une pompe mécanique apte à être entrainée par la machine électrique préalablement à la commande de l'accouplement de la machine électrique avec le moteur thermique. On précisera toutefois que le régime R4 peut être de toute valeur supérieure à 100 tr/min. De plus, cette étape n'est pas essentielle lors de l'exécution du procédé de démarrage.

Par ailleurs, à partir de t1 le procédé calcule en continu la durée Dr1 qui s'écoule durant l'opération de démarrage Dm1 de manière à surveiller son déroulement. Le compteur calculant la durant Dr1 est arrêté une fois que le moteur thermique est tournant de manière autonome, c'est-à-dire sans couple moteur transmis par la machine motrice. La durée Dr1 est comparée continuellement avec une durée sécuritaire prédéterminée. La durée sécuritaire est calibrée selon les prestations recherchées. En cas de détection que la durée Dr1 est supérieure à la durée sécuritaire, un signal d'alerte est émis, ce qui a pour fonction de mettre fin à la première procédure de démarrage Dm1.

On notera qu'en variante, le procédé peut prévoir d'autres critères de surveillance en remplacement ou en complément du calcul de la durée Dr1 pour surveiller le déroulement de la procédure de démarrage. Par exemple, le procédé peut mettre en œuvre des étapes de contrôle du régime moteur de la machine motrice ou de contrôle relatif à un état de saturation du système de batterie.

A une étape 36, lorsque le module de coordination détecte que la phase de mise en pression est terminée, à l'instant t2 sur la figure 3, le procédé commande à une étape 37, la fermeture du dispositif d'embrayage pour accoupler l'arbre en rotation de la machine motrice avec l'arbre à l'arrêt du moteur thermique. A cet instant, un couple moteur commence à être transmis progressivement de la machine électrique au moteur thermique. A cet instant t2, le régime de rotation de la machine motrice tourne à la valeur R4, puis diminue progressivement du fait de la charge apportée par l'arbre du moteur thermique.

Selon la première procédure de démarrage Dm1, durant l'étape 37 la machine motrice est pilotée en régulation de régime de manière à piloter avec précision le régime de la machine motrice durant la phase transitoire d'accouplement. Le module de la machine motrice régule le régime Rmel pour que le régime moteur Rmth atteigne le régime cible R1 et se synchronise au régime R1.

Lorsque le régime moteur Rmth atteint le régime R1, le module du moteur thermique commande les consignes nécessaires au déclenchement de la première combustion. Dans ce cas précis, l'injection de carburant dans les cylindres du moteur thermique est réalisée lorsque le module du moteur thermique détecte la synchronisation du moteur au régime moteur R1 et lorsque la pression minimale pour l'injection de carburant est atteinte. Une fois que le mélange air/carburant est en contact avec l'étincelle des bougies, la combustion est initiée. Le procédé de démarrage peut alors se terminer à l'étape 37, le moteur fonctionne alors en régulation de régime à la valeur du régime de ralenti.

Toutefois, après l'instant t2, une fois l'accouplement terminé, on remarque dans cette situation particulière que le régime de rotation Rmel et le régime de rotation Rmth stagnent à la valeur R3 du fait du manque de puissance électrique disponible par le système de batterie.

A l'instant t3, le critère de surveillance dépasse la limite autorisée. Dans ce cas précis, la durée Dr1 devient supérieure au seuil prédéterminé. A l'étape 38, le module de coordination émet un signal d'alerte pour informer les autres organes de motorisation du dépassement de la durée sécuritaire et déclencher la fin de la première procédure.

A l'étape 39, lorsque le signal d'alerte est détecté, le module de coordination commande au moteur thermique l'arrêt de la première procédure de démarrage, commande le régime de la machine motrice à un régime nul, commande l'ouverture du dispositif d'embrayage et transmet les consignes nécessaires à la boite de vitesses pour réinitialiser une autre procédure de démarrage.

Une fois que les conditions d'arrêt sont respectées, le module de coordination temporise le déclenchement de la deuxième procédure durant une durée d'arrêt prédéterminée. Durant la durée d'arrêt, le régime de la machine motrice Rmel et le régime du moteur thermique Rmth sont nuls. La durée d'arrêt correspond à la période entre les instants t3 et t4.

A l'instant t4, lors d'une étape 40 du procédé, le module de coordination déclenche la deuxième procédure de démarrage Dm2 indépendamment du niveau de la puissance d'énergie électrique disponible par le système de batterie à l'instant t4. A cet effet, à une étape 41 le module de coordination informe le calculateur du moteur thermique que la deuxième procédure de démarrage Dm2 est déclenchée et à une étape 42 le module de coordination informe le calculateur de la boite de vitesses que la deuxième procédure Dm2 est déclenchée. Ces deux étapes ont pour objectif de déclencher la séquence des consignes nécessaires pour le déroulement de la deuxième procédure de démarrage Dm2, par exemple la valeur de régime moteur R2 à laquelle est déclenchée la première combustion.

Ensuite, à l'instant t4, le procédé commande une étape 43 de pilotage de la machine motrice à une valeur de régime R4, ici supérieure à la valeur du régime de ralenti du moteur thermique. Cette étape vise à mettre en pression le moteur thermique préalablement à la commande de l'accouplement de la machine électrique avec le moteur thermique.

Par ailleurs, identiquement à la première procédure, à partir de t4 le procédé calcule en continu une durée qui s'écoule durant l'opération de démarrage Dm2 de manière à surveiller son déroulement. Le compteur calculant la durant est arrêté une fois que le moteur thermique est tournant de manière autonome, c'est-à-dire sans couple moteur transmis par la machine motrice.

A une étape 44, lorsque le module de coordination détecte que la phase de mise en pression est terminée, à l'instant t5 sur la figure 3, le procédé commande à une étape 35, la fermeture du dispositif d'embrayage pour accoupler l'arbre en rotation de la machine motrice avec l'arbre à l'arrêt du moteur thermique. A cet instant, un couple moteur commence à être transmis progressivement de la machine électrique au moteur thermique. A cet instant t5, le régime de rotation de la machine motrice tourne à la valeur R4, puis diminue progressivement du fait de la charge apportée à l'arbre du moteur thermique.

Toutefois, à la différence de la première procédure Dm1, durant la procédure de démarrage Dm2, le module de pilotage de la machine motrice pilote cette dernière en régulation de couple. Le module de la machine motrice régule le couple moteur de manière que le régime moteur Rmth atteigne le régime cible R2 à une valeur d'environ 200 tr/min uniquement grâce au couple moteur de la machine motrice, similairement à un régime de démarreur conventionnel.

Durant l'étape 45, une fois que le module du moteur thermique détecte les conditions propices au démarrage, celui-ci déclenche la première combustion à l'instant t6. Dans ce cas précis, l'injection de carburant dans les cylindres du moteur thermique est réalisée lorsque le module du moteur thermique détecte la synchronisation du moteur au régime moteur R2 et lorsque la pression minimale pour l'injection de carburant est atteinte. Une fois que le mélange air/carburant est en contact avec l'étincelle des bougies, la combustion est initiée.

A l'étape 46, le module du moteur thermique détecte l'atteinte du régime de ralenti et signale à l'instant t7 le démarrage réussi du moteur thermique. A l'étape 47, le moteur thermique fonctionne dans un état tournant en régulation au régime de ralenti de manière autonome.

On notera que durant la première et deuxième procédure de démarrage Dm1 et Dm2, l'amorçage de la rotation de l'arbre du moteur thermique est réalisé uniquement par le couple moteur de la machine motrice lorsque l'arbre du moteur thermique est à l'arrêt. L'invention concerne les moteurs thermiques à allumage commandé ainsi que les moteurs à allumage par compression au premier régime dans le cas de la première procédure dite à régime élevé ou au deuxième régime dans le cas de la deuxième procédure. L'invention s'applique aux situations de démarrage du véhicule lors de la mise en action, lors d'un redémarrage à l'arrêt du véhicule ou bien encore lors d'un redémarrage du moteur thermique en situation de vitesse non nulle (fonction roue libre contrôlée par exemple).

## Revendications

1. Procédé de commande du démarrage d'un moteur thermique (10) de groupe motopropulseur hybride (1) comportant également une machine motrice de traction (12) alimentée par un accumulateur d'énergie (16) apte à être accouplée au moteur thermique (10) en cas de détection d'une requête de démarrage de manière à entrainer en rotation le moteur thermique (10) à un régime cible moteur auquel la première combustion du moteur est déclenchée, le procédé étant **caractérisé en ce qu'**il comporte les étapes successives suivantes :
- en cas de détection (31) d'une requête de démarrage, la détermination (32) de la puissance d'énergie délivrable par l'accumulateur (16) à ladite machine motrice (12) à l'instant de la détection de ladite requête,
- lorsque ladite puissance d'énergie est supérieure à un seuil prédéterminé, le déclenchement (33) d'une première procédure de démarrage (Dm1) consistant à entrainer en rotation le moteur thermique (10) par la machine motrice (12) jusqu'à atteindre un premier régime cible moteur (R1),
- et lorsque ladite puissance est inférieure audit seuil, le déclenchement (40) d'une deuxième procédure de démarrage (Dm2) consistant à entrainer en rotation le moteur thermique (10) par la machine motrice (12) jusqu'à atteindre un deuxième régime cible moteur (R2) inférieur au premier régime cible (R1), ce procédé comportant en outre, en cas de détection (38) d'un échec de la première procédure de démarrage (Dm1), le déclenchement (40) de la deuxième procédure de démarrage (Dm2).

2. Procédé selon la revendication 1, comportant en outre, en cas de détection de l'échec (38), la temporisation du déclenchement de la deuxième procédure (Dm2) durant une durée d'arrêt prédéterminée.

3. Procédé selon l'une quelconque des revendications 1 à 2, comportant, pour détecter l'échec de la première procédure de démarrage (Dm1), le calcul en continu d'une durée (Dr1) depuis l'instant du déclenchement de ladite première procédure (Dm1), et lorsque ladite durée écoulée (Dr1) est supérieure à une durée sécuritaire prédéterminée un signal d'alerte est émis.

4. Procédé selon l'une quelconque des revendications 1 à 3, dans lequel la première procédure de démarrage (Dm1) consiste à piloter la machine motrice (12) en mode de régulation de régime en fonction d'une consigne de régime configurée pour entrainer le moteur thermique (10) en rotation jusqu'au premier régime cible moteur (R1).

5. Procédé selon l'une quelconque des revendications 1 à dans lequel la deuxième procédure de démarrage (Dm2) consiste à piloter la machine motrice (12) en mode de régulation de couple en fonction d'une consigne de couple configurée pour entrainer le moteur thermique (10) en rotation jusqu'au deuxième régime cible moteur (R2).

6. Procédé selon l'une quelconque des revendications 1 à 5, dans lequel le premier régime cible (R1) du moteur thermique (10) est compris entre 650 tr/min et 1200 tr/min, et de préférence est d'environ 800 tr/min.

7. Procédé selon l'une quelconque des revendications 1 à 6, dans lequel le deuxième régime cible (R2) du moteur thermique (10) est compris entre 100 tr/min et 300 tr/min, et de préférence est environ 200 tr/min.

8. Unité de commande (20) d'un groupe motopropulseur hybride de véhicule automobile comportant des moyens de mettre en œuvre le procédé selon l'une quelconque des revendications 1 à 7.

9. Véhicule automobile comportant un groupe motopropulseur hybride (1) comprenant un moteur thermique (10), une machine motrice de traction (12) laquelle est apte fournir un couple aux roues en mode de roulage électrique et apte à transmettre un couple moteur au moteur thermique (10), et une unité de commande (20) selon la revendication 8.

## Patentansprüche

1. Verfahren zum Steuern des Starts einer Wärmekraftmaschine (10) eines Hybridantriebsstrangs (1), der auch eine Traktionsantriebsmaschine (12) umfasst, die von einem Energiespeicher (16) angetrieben wird, der in dem Fall mit der Wärmekraftmaschine (10) gekoppelt werden kann zum Erfassen einer Startanforderung, um die Wärmekraftmaschine (10) mit einer Zielmotordrehzahl zu drehen, bei der die erste Verbrennung des Motors ausgelöst wird, wobei das Verfahren **dadurch gekennzeichnet ist, dass** es die folgenden aufeinanderfolgenden Schritte umfasst:
- im Falle der Erfassung (31) einer Startanforderung die Bestimmung (32) der vom Akkumulator (16) an die Antriebsmaschine (12) zum Zeitpunkt der Erfassung der Anfrage abzugebenden Energieleistung,
- wenn die Energieleistung größer als ein vorbestimmter Schwellenwert ist, Auslösen (33) eines ersten Startvorgangs (Dm1), der darin besteht, die Wärmekraftmaschine (10) durch die Antriebsmaschine (12) drehend anzutreiben, bis ein erstes Ziel erreicht ist Motordrehzahl (R1),
- und wenn die Leistung niedriger als der Schwellenwert ist, Auslösen (40) eines zweiten Startvorgangs (Dm2), der darin besteht, den Verbrennungsmotor (10) durch die Antriebsmaschine (12) in Drehung zu versetzen, bis er eine zweite Motordrehzahl erreicht Soll (R2) kleiner als die erste Sollgeschwindigkeit (R1) ist, wobei dieses Verfahren ferner im Fall der Erfassung (38) eines Fehlschlagens des ersten Startvorgangs (Dm1) das Auslösen (40) des zweiten Startvorgangs (DM2).

2. Verfahren nach Anspruch 1, ferner umfassend, im Falle des Erkennens des Fehlers (38), das Verzögern des Auslösens der zweiten Prozedur (Dm2) während einer vorbestimmten Stoppzeit .

3. Verfahren nach einem der Ansprüche 1 bis 2, umfassend, um das Versagen des ersten Startvorgangs (Dm1) zu erfassen, die kontinuierliche Berechnung einer Dauer (Dr1) ab dem Zeitpunkt der Auslösung des ersten Vorgangs (Dm1), und wenn die verstrichene Zeit (Dr1) größer als eine vorbestimmte sichere Zeit ist, wird ein Warnsignal ausgegeben.

4. Verfahren nach einem der Ansprüche 1 bis 3, bei dem die erste Startprozedur (Dm1) darin besteht, die Antriebsmaschine (12) in den Geschwindigkeitsregelungsmodus gemäß einem Geschwindigkeitssollwert zu steuern, der so konfiguriert ist, dass er die Motorheizung (10) antreibt Drehung bis zur ersten Soll-Motordrehzahl (R1).

5. Verfahren nach Anspruch 1, bei dem die zweite Startprozedur (Dm2) darin besteht, die Antriebsmaschine (12) im Drehmomentregelungsmodus gemäß einem Drehmomentsollwert anzutreiben, der so konfiguriert ist, dass er die Wärmekraftmaschine (10) bis zur Sekunde rotierend antreibt Soll-Motordrehzahl (R2).

6. Verfahren nach einem der Ansprüche 1 bis 5, bei dem die erste Solldrehzahl (R1) der Wärmekraftmaschine (10) zwischen 650 U/min und 1200 U/min liegt und vorzugsweise bei etwa 800 U/min min liegt.

7. Verfahren nach einem der Ansprüche 1 bis 6, bei dem die zweite Solldrehzahl (R2) des Verbrennungsmotors (10) zwischen 100 U/min und 300 U/min liegt und vorzugsweise bei etwa 200 U/min liegt.

8. Steuereinheit (20) eines Kraftfahrzeug-Hybridantriebsstrangs, umfassend Mittel zum Implementieren des Verfahrens nach einem der Ansprüche 1 bis 7.

9. Kraftfahrzeug mit einem Hybridantriebsstrang (1) mit einer Wärmekraftmaschine (10), einer Traktionsantriebsmaschine (12), die im elektrischen Fahrbetrieb den Rädern ein Drehmoment zuführen und an die Wärmekraftmaschine (12) ein Antriebsmoment übertragen kann (10) und eine Steuereinheit (20) nach Anspruch 8.

## Claims

1. Method for controlling the starting of a heat engine (10) of a hybrid powertrain (1) also comprising a traction drive machine (12) powered by an energy accumulator (16) capable of being coupled to the heat engine (10) in the event of detection of a start request so as to rotate the heat engine (10) at a target engine speed at which the first combustion of the engine is triggered, the method being **characterized in that** it comprises the following successive steps
- in the event of detection (31) of a start request, the determination (32) of the power of energy deliverable by the accumulator (16) to the said prime mover (12) at the instant of the detection of the said query,
- when said energy power is greater than a predetermined threshold, the triggering (33) of a first start-up procedure (Dm1) consisting in driving the heat engine (10) in rotation by the driving machine (12) until reach a first target engine speed (R1),
- and when said power is lower than said threshold, the triggering (40) of a second start-up procedure (Dm2) consisting in driving the thermal engine (10) in rotation by the prime mover (12) until reaching a second speed engine target (R2) lower than the first target speed (R1), this method further comprising, in the event of detection (38) of a failure of the first starting procedure (Dm1), the triggering (40) of the second procedure start (Dm2).

2. Method according to claim 1, further comprising, in the event of detection of the failure (38), the delay of the triggering of the second procedure (Dm2) during a predetermined stopping time.

3. Method according to any one of Claims 1 to 2, comprising, in order to detect the failure of the first start-up procedure (Dm1), the continuous calculation of a duration (Dr1) from the instant of triggering of the said first procedure (Dm1), and when said elapsed time (Dr1) is greater than a predetermined safe time, a warning signal is emitted.

4. Method according to any one of Claims 1 to 3, in which the first start-up procedure (Dm1) consists in piloting the prime mover (12) in speed regulation mode according to a speed setpoint configured to drive the motor heat (10) in rotation up to the first target engine speed (R1).

5. Method according to claim 1, in which the second start-up procedure (Dm2) consists in driving the prime mover (12) in torque regulation mode according to a torque setpoint configured to drive the heat engine (10) in rotation up to the second target engine speed (R2).

6. Method according to any one of Claims 1 to 5, in which the first target speed (R1) of the heat engine (10) is between 650 rpm and 1200 rpm, and preferably is around 800 rpm. min.

7. Method according to any one of Claims 1 to 6, in which the second target speed (R2) of the thermal engine (10) is between 100 rpm and 300 rpm, and preferably is approximately 200 rpm.

8. Control unit (20) of a motor vehicle hybrid powertrain comprising means for implementing the method according to any one of Claims 1 to 7.

9. Motor vehicle comprising a hybrid powertrain (1) comprising a heat engine (10), a traction drive machine (12) which is able to supply a torque to the wheels in electric driving mode and able to transmit a driving torque to the heat engine ( 10), and a control unit (20) according to claim 8.
